(19) Europäisches Patentamt
European Patent Office
Office européen des brevets

(11) **EP 2 009 346 B1**

(12) **FASCICULE DE BREVET EUROPEEN**

(45) Date de publication et mention
de la délivrance du brevet:
**23.04.2014 Bulletin 2014/17**

(51) Int Cl.:
***B60Q 1/00*** *(2006.01)* ***F21S 8/10*** *(2006.01)*

(21) Numéro de dépôt: **08158537.4**

(22) Date de dépôt: **19.06.2008**

(54) **Module d'éclairage pour projecteur de véhicule automobile**

Beleuchtungsmodule für Scheinwerfer eines Kraftfahrzeugs

Lighting unit for vehicle headlamp

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.06.2007 FR 0704559**

(43) Date de publication de la demande:
**31.12.2008 Bulletin 2009/01**

(73) Titulaire: **Valeo Vision**
**93012 Bobigny Cedex (FR)**

(72) Inventeur: **Albou, Pierre**
**75013, PARIS (FR)**

(56) Documents cités:
**EP-A- 1 471 305    EP-A- 1 528 312**

**Description**

L'invention est relative à un module d'éclairage, pour projecteur lumineux de véhicule automobile, prévu pour donner un faisceau à coupure. Un type de module, par exemple d'après le brevet US 6 966 675 et EP 1528312, comprend :

-   au moins une source lumineuse,
-   un miroir collecteur, par exemple de type ellipsoïdal, ayant un premier foyer auquel, ou au voisinage duquel, la source lumineuse est disposée pour éclairer vers le miroir collecteur, et un deuxième foyer situé sur l'axe optique du module;
-   une plieuse ayant une surface réfléchissante et un bord de coupure passant par le deuxième foyer du miroir collecteur,
-   un miroir de renvoi, par exemple de type parabolique, pour produire vers l'avant le faisceau de sortie à coupure, le miroir de renvoi admettant un foyer de préférence confondu avec le, ou situé au voisinage du, second foyer du miroir collecteur, le bord de coupure de la plieuse passant par le foyer du miroir de renvoi, ou à son voisinage, le miroir de renvoi étant situé essentiellement au-dessus du miroir collecteur lorsque le module est en place sur le véhicule.

La société demanderesse a en outre déposé une demande de brevet français FR 06 03 062 le 06 avril 2006, selon laquelle un miroir de renvoi situé au-dessous du miroir collecteur peut être combiné avec un second miroir de renvoi situé essentiellement au-dessus d'un second miroir collecteur.

Les modules d'éclairage de l'état de la technique, avec miroir de renvoi de type parabolique situé essentiellement au-dessus du miroir collecteur ne permettent pas, à ce jour, d'obtenir de manière satisfaisante des faisceaux larges.

L'invention a pour but, surtout, de fournir un module d'éclairage permettant d'obtenir un faisceau large, à coupure.

De préférence, la coupure du faisceau doit être nette, même si la source lumineuse est inclinée par rapport à l'axe longitudinal du véhicule, notamment dans un projecteur galbé.

Il est souhaitable en outre que la conception du module facilite sa fabrication, notamment quant aux liaisons électriques de la source lumineuse, en particulier lorsque cette source est constituée par des diodes électroluminescentes ou leds.

Plus particulièrement, l'invention a pour objet un module d'éclairage pour projecteur lumineux de véhicule automobile, prévu pour donner un faisceau à coupure, notamment un faisceau code, ce module comprenant :

-   au moins une source lumineuse,
-   un miroir collecteur,
-   une plieuse ayant une surface réfléchissante et un bord de coupure, ladite plieuse étant constituée par une portion de cylindre tournant sa convexité vers le miroir collecteur, et
-   un miroir de renvoi, pour produire vers l'avant le faisceau de sortie à coupure.

Avantageusement, les surfaces du miroir collecteur, de la plieuse, et du miroir de renvoi sont des surfaces conjuguées telles que :

-   le miroir collecteur transforme une onde sphérique issue du centre de la source en au moins une surface d'onde se réduisant à une courbe en deux dimensions, convexe vers l'avant,
-   le bord de coupure de la plieuse est confondu avec cette courbe,
-   le miroir de renvoi transforme la surface d'onde précédente en au moins une surface d'onde cylindrique d'axe vertical admettant comme section droite une courbe permettant l'étalement horizontal du faisceau.

La surface réfléchissante convexe de la plieuse permet d'élargir le faisceau sortant. L'ensemble permet de créer un faisceau sortant large à coupure.

Préférentiellement, pour améliorer la netteté de la ligne de coupure, la plieuse admet comme direction de génératrices l'intersection du plan vertical de symétrie gauche/droite de la source lumineuse et du plan moyen de la source, et les génératrices de la portion de cylindre formant la plieuse s'appuient sur ladite courbe.

Le module d'éclairage selon l'invention peut comporter, en plus des caractéristiques principales qui viennent d'être mentionnées dans le paragraphe précédent, une ou plusieurs caractéristiques supplémentaires parmi les suivantes:

-   le miroir de renvoi est situé essentiellement au-dessus du miroir collecteur lorsque le module est en place sur le véhicule ; permettant ainsi de créer une coupure délimitant la partie du supérieur du faisceau lumineux émis par le module d'éclairage ;

- la source lumineuse est disposée de manière à émettre un faisceau lumineux dont la direction moyenne, en projection orthogonale sur un plan horizontal, est inclinée par rapport à l'axe longitudinal du véhicule et s'en écarte vers l'extérieur du véhicule (on comprend par « extérieur véhicule » le côté qui s'écarte de l'axe longitudinal du véhicule) ;
- le miroir collecteur a une forme se rapprochant d'une forme ellipsoïdale, ayant un premier foyer auquel, ou au voisinage duquel, la source lumineuse est disposée pour éclairer vers le miroir collecteur, et un deuxième foyer situé sur l'axe optique du module, le bord de coupure de la plieuse passant de préférence par le deuxième foyer du miroir collecteur;
- le miroir de renvoi a une forme se rapprochant d'une forme parabolique, pour produire vers l'avant le faisceau de sortie à coupure, le miroir de renvoi admettant un foyer confondu avec le, ou situé au voisinage du, second foyer du miroir collecteur, le bord de coupure de la plieuse passant par le foyer du miroir de renvoi, ou à son voisinage;
- le miroir collecteur est déterminé pour transformer la surface d'onde sphérique issue du centre de la source en une surface d'onde torique correspondant à une plieuse à bord circulaire;
- le miroir de renvoi est tourné d'un angle autour de l'axe optique du système pour redresser le faisceau sortant par rapport à l'horizontale;
- les surfaces conjuguées sont déterminées pour compenser l'inclinaison de la direction moyenne d'émission de la source et donner un faisceau sortant dont l'axe soit sensiblement moins incliné que l'axe du module (matérialisé, comme illustré plus loin, par $\Delta d$ et $\Delta g$) ;
- les surfaces conjuguées sont déterminées pour compenser l'inclinaison de la direction moyenne d'émission de la source et donner un faisceau sortant dont l'axe soit sensiblement parallèle à l'axe géométrique du véhicule lorsque le module est en place sur le véhicule;
- la source lumineuse est constituée par une diode électroluminescente comportant au moins un émetteur plan, ou par plusieurs diodes électroluminescentes dont tous les émetteurs plans sont situés sur un même plan;
- l'ouverture angulaire du faisceau sortant du module est d'au moins 30° (ou au moins 40°) de chaque côté de l'axe du faisceau.

Les caractéristiques supplémentaires sont associées, selon toutes les combinaisons possibles et dans la mesure où ces caractéristiques supplémentaires ne s'excluent pas mutuellement, dans différents exemples de réalisation de l'objet de l'invention.

Dans le cas d'une source lumineuse formée par au moins une diode électroluminescente à émetteur plan, le plan moyen de la source est celui de l'émetteur plan.

L'invention concerne également un projecteur code comportant au moins un module d'éclairage tel que défini précédemment. Le projecteur comporte avantageusement comme source lumineuse des diodes électroluminescentes à émetteurs plans qui sont situés sur un même plan, incliné horizontalement par rapport à l'axe géométrique du véhicule. De préférence, le plan des émetteurs est incliné horizontalement par rapport à la direction transversale, orthogonale à l'axe géométrique du véhicule, selon un angle de préférence d'au plus 45°, par exemple compris entre 2° et 40°.

Plus particulièrement, le projecteur code est du type DBL (dynamic bending light/éclairage dynamique de courbe) et comprend des modules orientables pour créer une zone centrale du faisceau avec coupure en V, et des modules fixes à ligne de coupure horizontale et à largeur de faisceau suffisante pour encadrer la zone centrale dans les positions extrêmes de braquage. Le projecteur code peut comporter vers l'extérieur du véhicule au moins deux modules orientables, et vers l'intérieur, trois modules fixes à faisceau large. Les modules orientables peuvent par exemple tourner autour d'un axe sensiblement vertical pour suivre la courbe de la route.

L'invention concerne également un projecteur route comportant un module d'éclairage décrit précédemment mais dans lequel le miroir de renvoi est situé essentiellement au-dessous du miroir collecteur lorsque le module est en place sur le véhicule. Ce module d'éclairage de type route permet ainsi de créer une coupure délimitant la partie inférieure du faisceau lumineux émis par le module d'éclairage. Ceci permet d'améliorer les qualités du faisceau route en évitant un excès de lumière proche sur la route et d'ajouter un supplément de lumière au loin. Préférentiellement ce module d'éclairage de type route est associé à un module d'éclairage de type code, selon l'invention ou non.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :

Fig. 1 est un schéma de la zone éclairée, sur un écran orthogonal à l'axe du faisceau, par un projecteur code de type DBL selon l'invention alors que les roues avant sont orientées en ligne droite.

Fig. 2 montre la zone éclairée par le projecteur de Fig. 1 pour un braquage maximal vers la gauche des roues avant du véhicule.

Fig. 3 est une vue schématique en plan de l'avant d'un véhicule avec projecteurs à sources lumineuses inclinées par rapport à la direction transversale du véhicule.

Fig. 4 est un schéma, à plus grande échelle, du projecteur gauche de Fig. 3.

Fig. 5 est une coupe schématique verticale suivant la ligne V-V de Fig. 4, d'un module d'éclairage selon l'invention.

Fig. 6 est un schéma en perspective d'un trièdre trirectangle avec courbes de surfaces d'onde.

Fig. 7 est un schéma pour le calcul de la surface d'onde en bord de plieuse.

Fig. 8 est une vue schématique en coupe verticale, selon la ligne VIII-VIII de Fig.9, d'un module selon l'invention avec trajets de rayons lumineux.

Fig. 9 est une vue schématique de dessus, avec parties en coupe, des éléments d'un module.

Fig. 10 est une vue schématique d'un module suivant la flèche X de Fig. 11.

Fig. 11 est une vue de dessus du module de Fig. 10.

Fig. 12 est une vue suivant la flèche XII de Fig. 11.

Fig. 13 montre un réseau de courbes isolux obtenu avec un module à source lumineuse inclinée, sans correction.

Fig. 14 montre un réseau de courbes isolux semblable à celui de Fig.13, mais avec correction.

Fig. 15 montre un réseau de courbes isolux corrigé et centré.

Fig. 16 est une vue en perspective sensiblement de trois-quarts face d'un module selon l'invention illustrant la rotation du miroir de renvoi, et

Fig. 17 est une vue schématique d'un projecteur DBL gauche comportant trois modules fixes et deux modules rotatifs.

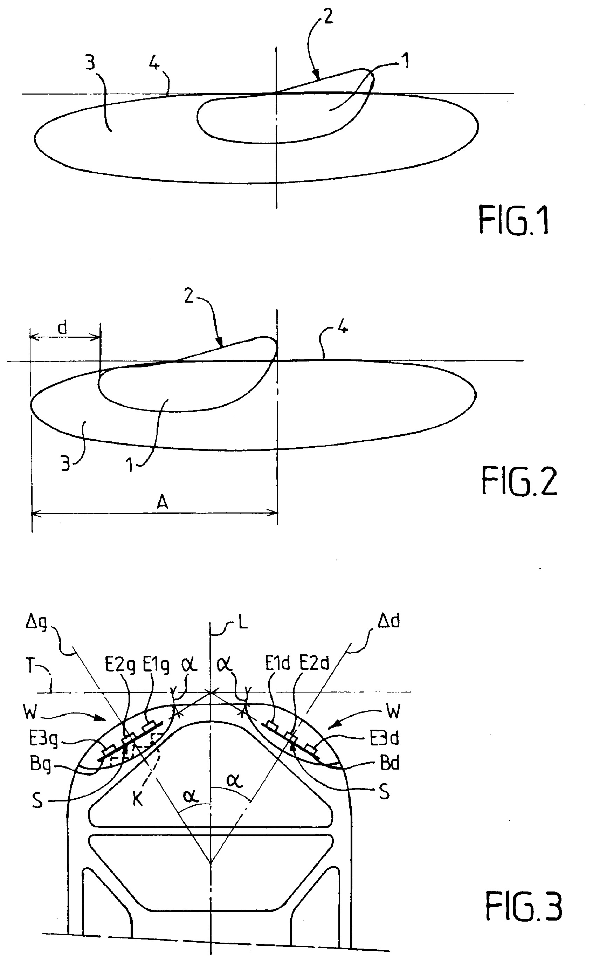

En se reportant aux dessins, on peut voir sur Fig. 1 et 2 des traces de faisceaux lumineux sur un écran situé à distance d'un projecteur et orthogonal à l'axe du faisceau.

Le schéma de Fig. 1 correspond à un faisceau code comprenant une partie centrale 1 à éclairage plus intense limitée par un bord de coupure 2 en V dont la branche située sur la gauche est sensiblement horizontale et la branche située sur la droite monte selon un angle de 15° sur l'horizontale. C'est une valeur d'angle non limitative, car cet angle peut être plus généralement compris entre 10 et 60°.

Le faisceau comprend en outre une partie plus large 3, qui déborde sur la droite et sur la gauche de la partie centrale 1. La partie large 3 admet une coupure plate 4 horizontale, située au même niveau que la branche horizontale de la coupure 2 en V. L'éclairage dans la partie 3 est moins intense que dans la partie 1, mais suffisant pour les zones latérales.

Dans le cas d'un projecteur DBL (éclairage dynamique de courbe) au moins la partie centrale 1 peut tourner autour d'un axe sensiblement vertical pour suivre le braquage des roues du véhicule.

Fig. 2 reprend le schéma de Fig. 1 mais avec la partie centrale 1 déplacée au maximum vers la gauche, par suite d'un braquage des roues avant sur la gauche. La partie large 3 du faisceau ne s'est pas déplacée angulairement car, selon l'invention, elle peut être obtenue avec un ou plusieurs modules fixes donnant un faisceau large.

La largeur du faisceau doit être suffisante pour que la partie 3 déborde au moins d'une distance minimale d par rapport à la partie centrale 1 lorsque cette dernière est déplacée au maximum d'un côté.

L'étendue angulaire A de la partie large 3 par rapport à l'axe longitudinal du véhicule est au moins de 30° de chaque côté de l'axe, vers l'extérieur du véhicule. L'étendue A correspond à l'angle entre la direction moyenne du faisceau et les rayons marginaux. En outre, la ligne de coupure plate 4 doit être nette.

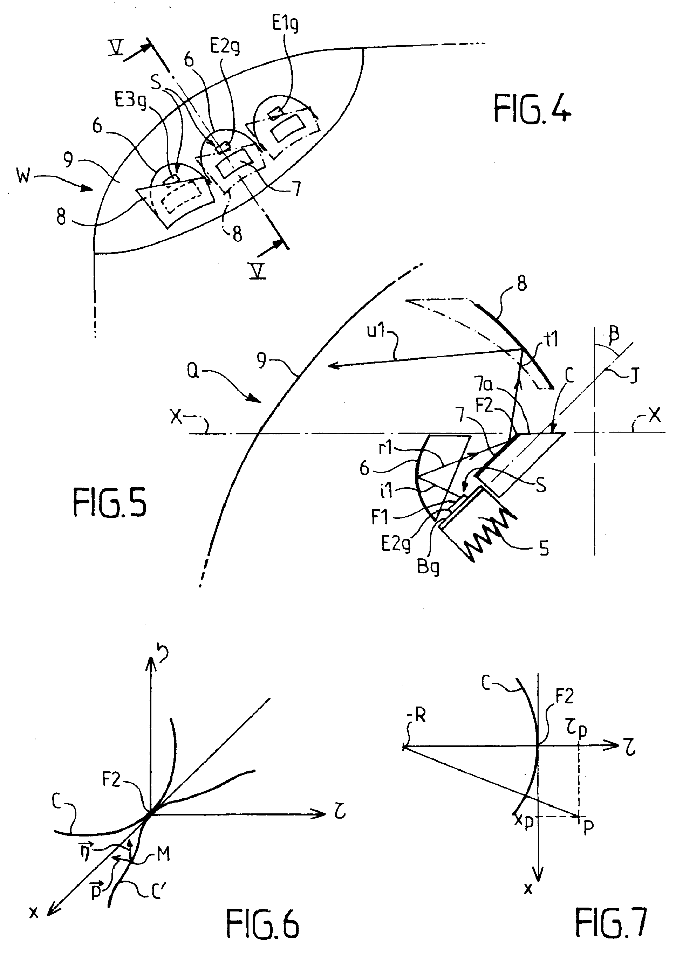

Ce problème de la réalisation d'un faisceau large avec coupure nette horizontale se complique lorsque le projecteur W, comme illustré schématique sur Fig. 3 et 4, est installé en biais dans un angle avant du véhicule. Il est souhaitable que la ou les sources lumineuses S soient disposées sensiblement parallèles à l'inclinaison moyenne du projecteur, notamment pour permettre leur logement suivant une profondeur réduite, et pour l'esthétique du projecteur.

La source lumineuse est avantageusement constituée par plusieurs diodes électroluminescentes, en abrégé « leds », comportant des émetteurs plans E1g, E2g, E3g, sur le côté gauche du véhicule et E1 d, E2d, E3d sur le côté droit du véhicule. De préférence, les émetteurs disposés d'un même côté du véhicule sont situés sur un seul et même support plan Bg, ou Bd. Cette disposition facilite la fabrication, notamment les opérations de connexion et de soudage des bornes des différents émetteurs.

Les traces des supports plans Bg, Bd sur un plan horizontal comme illustré sur Fig. 3 et 4, sont inclinées d'un angle $\alpha$ par rapport à la direction transversale T, orthogonale à l'axe longitudinal L du véhicule. De ce fait, la direction moyenne $\Delta$g, $\Delta$d du faisceau lumineux émis par chaque émetteur forme un angle $\alpha$ avec l'axe longitudinal L du véhicule.

Si on voulait maintenir les directions moyennes des faisceaux de chaque émetteur parallèles à l'axe L tout en conservant l'inclinaison moyenne d'ensemble du projecteur W illustrée sur Fig. 3, il faudrait adopter une disposition des émetteurs en escalier K qui compliquerait la fabrication et ne permettrait pas de suivre, avec les émetteurs, la ligne moyenne du projecteur galbé.

Fig.5 montre un module d'éclairage Q selon l'invention, avec source lumineuse S formée par au moins une led comportant au moins un émetteur plan E2g disposé sur le support plan Bg incliné d'un angle $\alpha$ (Fig. 3) par rapport à la direction transversale T du véhicule, et d'un angle $\beta$ par rapport à la direction verticale. L'angle $\beta$ peut être de l'ordre de 40°.

La source lumineuse S est disposée de manière à éclairer vers l'avant et vers le haut. Les termes « avant » et « arrière » sont à comprendre en considérant le sens normal de déplacement vers l'avant du véhicule équipé du module.

La disposition des leds sur un seul plan Bg permet d'avoir un seul radiateur 5, du côté du plan Bg opposé aux leds, pour l'ensemble des leds.

Un miroir collecteur 6 de type ellipsoïdal est disposé en avant de la source S et est tourné vers l'arrière. Ce miroir 6 comporte un premier foyer F1 auquel, ou au voisinage duquel, est disposé le centre de la source S qui éclaire vers le miroir 6, et un deuxième foyer F2 situé sur l'axe optique X-X du module.

Le module comporte une plieuse 7 constituée par une portion de paroi cylindrique réfléchissante convexe vers l'avant, c'est-à-dire vers la gauche selon Fig. 5. Les génératrices de la plieuse 7 sont parallèles à l'intersection J du plan vertical de symétrie gauche/droite de la source S, et du plan moyen de son support Bg. L'inclinaison des génératrices de la plieuse sur la direction verticale est ainsi la même que celle du support Bg. Le bord supérieur 7a de la plieuse, convexe vers l'avant, constitue le bord de coupure du faisceau et passe par le deuxième foyer F2 du miroir collecteur 6, ou au voisinage de ce foyer.

Un miroir de renvoi 8, de type parabolique, est situé essentiellement au-dessus du miroir collecteur 6. La surface réfléchissante du miroir 8 est tournée vers l'avant pour produire le faisceau de sortie à coupure. Le miroir de renvoi 8 admet un foyer confondu avec le second foyer F2 du miroir collecteur 6, ou situé au voisinage de F2.

La plieuse 7 qui forme un miroir convexe vers l'avant est favorable à la création d'un faisceau large.

Une glace 9, en matière transparente, verre ou matière plastique, est disposée en avant des éléments du module d'éclairage.

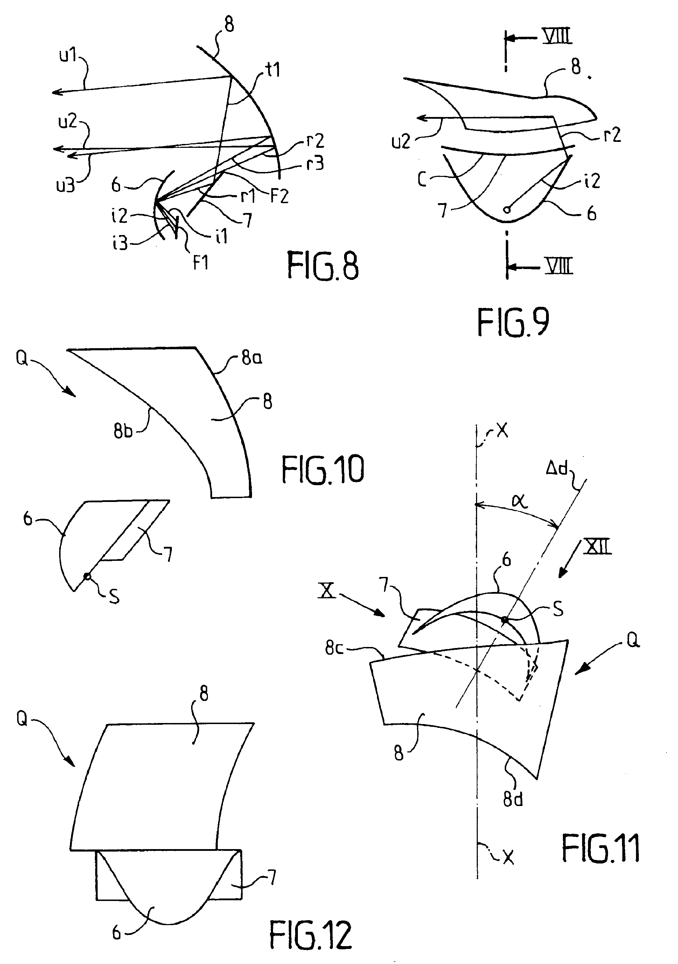

Les Fig. 10-12 sont des vues d'une variante de réalisation d'un module selon le schéma de Fig. 5, avec une disposition relative de la plieuse et des miroirs légèrement différente. La plieuse 7 est plus proche du miroir collecteur 6 que sur Fig. 5, et le bord inférieur du miroir de renvoi 8 est situé dans un plan horizontal qui affleure le bord supérieur du miroir collecteur 6 et de la plieuse 7.

Comme visible sur Fig. 11, en projection orthogonale sur un plan horizontal, la source lumineuse S émet un faisceau lumineux ayant une direction moyenne $\Delta$d qui est inclinée par rapport à la direction de l'axe géométrique du véhicule d'un angle $\alpha$ lorsque le module est en place sur le véhicule.

La plieuse 7 constituée par une portion de cylindre admettant l'intersection J comme direction de génératrices. Ce type de surface peut être utilisé pour un ou deux modules réalisant la partie du faisceau située le plus vers l'extérieur du véhicule.

Toutefois, dans le cas de projecteurs P en biais comme sur Fig.3, cette solution ne permet pas de redresser le faisceau et donc de placer toutes les leds sur un même plan. Il est théoriquement possible de faire tourner l'ensemble plieuse + miroir de renvoi autour d'un axe vertical, mais un tel module sera mal adapté à la création d'un faisceau large conservant une bonne coupure dans le champ.

De préférence, selon l'invention, notamment pour des projecteurs P avec des sources S inclinées comme sur Fig.3, les surfaces du miroir collecteur 6, de la plieuse 7 et du miroir de renvoi 8 sont des surfaces conjuguées comme exposé ci-après.

Le miroir collecteur 6 est prévu pour transformer une surface d'onde sphérique issue du centre de la source S en une surface d'onde arbitraire se ramenant à une ligne C en deux dimensions qui définit alors le bord de la plieuse 7. En pratique, on choisit pour la surface d'onde arbitraire une surface d'onde torique, et le bord C est alors circulaire ; cette solution, la plus simple, permet un calcul analytique et offre un paramètre qui permet de faciliter l'étalement horizontal correspondant au rayon majeur du tore. On choisit un bord de plieuse C convexe, vu de l'extérieur du projecteur, qui admet un plan de symétrie commun avec l'émetteur de la source S.

Le miroir de renvoi 8 est déterminé pour transformer cette surface d'onde C en une surface d'onde cylindrique d'axe vertical admettant une courbe quelconque C' (Fig. 6) pour section droite.

La courbe C' caractérisant l'onde émergeant du module, est choisie de manière à compenser, au moins en partie, l'inclinaison horizontale $\alpha$ du plan de la, ou des leds par rapport à l'axe L du véhicule. Cette courbe C' sert à régler l'étalement horizontal du faisceau.

Ce concept conduit à un faisceau de sortie d'axe X-X (Fig.11) décalé angulairement, de 30° dans l'exemple considéré, par rapport à la direction perpendiculaire au plan de l'émetteur de trace $\Delta$d dans un plan représenté à la figure 11.

L'ensemble permet de créer un faisceau sortant large à ligne de coupure nette, malgré l'inclinaison horizontale de la source S.

Comme visible sur Fig. 10, le contour apparent du miroir de renvoi 8 en projection orthogonale sur le plan vertical de symétrie du miroir collecteur 6 et de la plieuse 7 est limité par : un segment horizontal inférieur de longueur réduite ; un segment horizontal supérieur de plus grande longueur ; un bord arrière 8a courbe convexe vers l'arrière ; un bord avant courbe 8b concave vers l'avant, plus incliné dans sa partie haute sur l'horizontale que dans sa partie basse.

Le contour apparent du miroir 8 en projection horizontale, visible sur Fig. 11, est limité : vers l'avant par un bord 8c transversal ; vers l'arrière par un bord 8d concave vers l'arrière ; et sur les côtés par deux segments sensiblement rectilignes convergeant vers l'arrière.

En vue de face, selon Fig. 12, le miroir de renvoi 8 a un contour sensiblement en forme de parallélogramme dont les côtés inférieur et supérieur sont horizontaux, les deux autres côtés étant respectivement convexe à gauche et concave à droite.

En se reportant à Fig. 8, on peut voir différents cas possibles pour les trajets des rayons lumineux.

Un rayon i1, issu d'un point situé au-dessus du premier foyer F1 du miroir 6, est réfléchi suivant un rayon r1 qui frappe la plieuse 7 au-dessous de son bord supérieur, et donc au-dessous du foyer F2. Le rayon r1 est réfléchi suivant un rayon t1, lequel est réfléchi par le miroir 8 selon un rayon u1 descendant.

Ce cas de figure est illustré également sur Fig.5.

Un rayon i2 émis du foyer F1 (situé au centre de la source) est réfléchi suivant un rayon r2 qui tangente le bord supérieur de la plieuse 7 sans être dévié et est réfléchi par le miroir 8 suivant un rayon u2 horizontal, correspondant au bord de coupure du faisceau.

Un rayon i3 provenant d'un point de la source lumineuse situé au-dessous du centre, et donc du foyer F1, est réfléchi par le miroir 6 suivant un rayon r3 qui passe au-dessus du bord supérieur de la plieuse 7. Ce rayon r3 est réfléchi par le miroir 8 suivant un rayon u3 descendant.

Il apparaît ainsi que le faisceau sortant est situé au-dessous d'un bord de coupure correspondant au plan horizontal passant par le rayon u2.

Le bord de coupure est net et le faisceau est large, son étendue angulaire étant de préférence d'au moins 30° du côté extérieur véhicule.

Fig. 9 illustre en vue de dessus le trajet du rayon i2 réfléchi en r2 puis en u2.

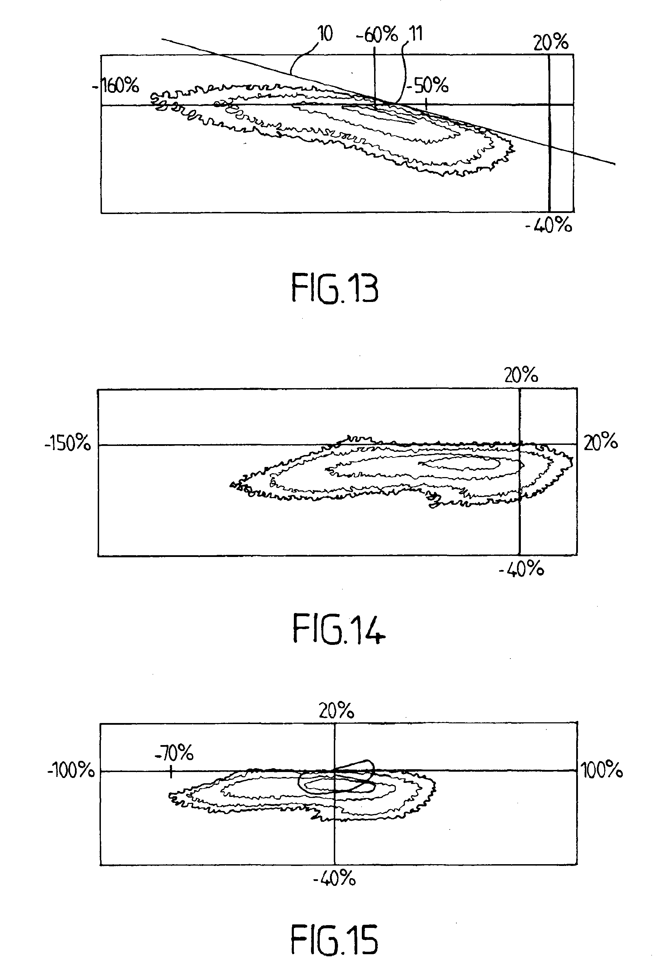

La source lumineuse constituée par une ou plusieurs leds présente une étendue non négligeable : en effet, un émetteur plan peut avoir une forme rectangulaire de 5,4 mm x 1 mm. Des rayons lumineux peuvent alors passer directement au-dessus de la plieuse 7 et d'autres rayons être réfléchis au-dessus de ladite plieuse. Ces rayons ne sont pas nécessairement réfléchis au-dessous d'une ligne horizontale, mais en fait au-dessous d'une ligne droite inclinée 10, comme illustré sur Fig. 13, coupant l'horizontale en un point 11. Ce point 11 correspond à l'angle $\alpha$ d'inclinaison horizontale du système. La graduation de l'axe horizontal est effectuée en valeurs des tangentes des angles d'inclinaison horizontale, exprimées en % . Pour une inclinaison de 30°, tg.30°= 0.57, soit 57%, ce qui correspond sensiblement à la position du point 11 sur Fig.13.

Le réseau de courbes isolux de Fig. 13 fait apparaître une inclinaison sur l'horizontale, avec sur la gauche une partie des courbes située au-dessus du plan horizontal de coupure.

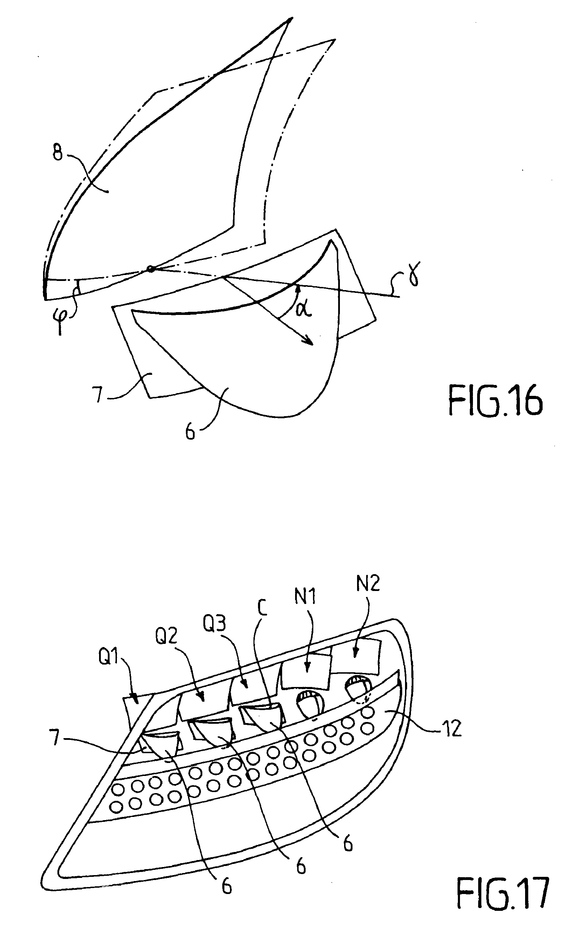

Avantageusement, on "redresse" le faisceau en faisant tourner le miroir de renvoi 8 autour de l'axe optique $\gamma$ (Fig.16) du système. Cet axe optique passe par le centre du bord de la plieuse 7 et est incliné horizontalement, sur l'axe longitudinal du véhicule, du même angle $\alpha$ que le plan des leds comme illustré en perspective sur Fig. 16. Le miroir 8, après rotation, est représenté en trait plein, alors que le miroir 8, avant rotation, est représenté en trait mixte. On obtient alors le réseau de courbes isolux illustré sur Fig. 14 qui se situe au-dessous de la ligne horizontale de coupure. Après centrage sur l'axe longitudinal du véhicule, on obtient le réseau de courbes de Fig. 15. Le principe est le suivant : on fait les calculs et on simule dans un repère dont l'axe correspond à $\Delta$d. On crée un faisceau décalé sur la gauche dans ce repère, de sorte que, dans le repère véhicule, le faisceau soit sensiblement centré.

On obtient finalement un faisceau presque intégralement situé du côté opposé à l'inclinaison du système et qui permet de procurer à un projecteur utilisant de tels modules un minimum de lumière vers l'intérieur du véhicule, c'est à dire vers la gauche pour un projecteur droit, comme illustré sur Fig. 15. Dans l'exemple précédent, calculé pour 30° et qui serait utilisé dans un projecteur ayant une inclinaison horizontale réelle de 15°, la tache de concentration et le maximum sont ramenés sur l'axe tout en conservant 35° de largeur vers l'intérieur du véhicule comme illustré sur Fig. 15 (tg.35°=0.69 soit 69%).

Fig. 17 montre un projecteur gauche DBL selon l'invention. Ce projecteur comporte, vers l'intérieur du véhicule, c'est-à-dire du côté le plus proche de l'axe géométrique longitudinal du véhicule, trois modules Q1, Q2, Q3 fixes tels que le module M décrit précédemment. Ces trois modules Q1, Q2, Q3 inclinés à 30° ou 40° par rapport à la direction transversale T du véhicule contribuent à la formation de la partie large 3 du faisceau de Fig. 1. La partie extérieure du projecteur comporte deux modules N1, N2 rotatifs autour d'un axe vertical selon l'angle de braquage des roues avant du véhicule. Ces modules N1, N2 créent la zone centrale 1 du faisceau de Fig.1 avec coupure en V et concentration. Une bande 12 située devant une zone neutre formée par les miroirs collecteurs 6 peut être utilisée pour une autre fonction, par exemple un éclairage ville.

On donne dans les pages suivantes avec référence aux Figs. 6 et 7 les calculs des surfaces de miroir, notamment du miroir de renvoi 8 permettant d'obtenir une surface d'onde cylindrique à section droite C'.

Sur la représentation en perspective de Fig.6, l'axe vertical est désigné par $\eta$, l'axe parallèle à la direction longitudinale L du véhicule est désigné par $\zeta$, et l'axe parallèle à la direction transversale est désigné par x. L'origine du trièdre trirectangle est confondue avec le foyer F2 commun aux miroirs 6 et 8. M est un point de la courbe C'.

Fig.7 est une représentation en projection orthogonale sur le plan horizontal des axes x et $\zeta$. La courbe C est un arc de cercle de rayon R et dont le centre est sur l'axe $\zeta$, à - R. Un point quelconque P, d'altitude $\eta_p$ est projeté sur le plan horizontal en un point de coordonnées $x_p$ et $\zeta_p$.

Calcul des surfaces

Surface d'onde de sortie :

Cylindre d'axe $\eta$ et de section droite $\zeta_o$ (x) = $\zeta_c$ (x) + x tg $\varphi$
avec $\varphi$ = angle d'inclinaison
tangente en

$$M = \begin{bmatrix} 1 \\ \dfrac{\partial \zeta_c}{\partial x} + \text{tg } \varphi \end{bmatrix}$$

si ($\overline{p}$, $\overline{\eta}$) sont des vecteurs directeurs du plan normal en M à la trace C' de la surface d'onde de sortie dans $\eta$ = o,

$$\overrightarrow{p} = \cfrac{1}{\sqrt{1 + \left[\dfrac{\partial \zeta_o}{\partial x} + \text{tg } \varphi\right]^2}} \cdot \begin{bmatrix} 1 \\ \dfrac{\partial \zeta_c}{\partial x} + \text{tg } \varphi \\ o \end{bmatrix} \wedge \begin{bmatrix} o \\ o \\ 1 \end{bmatrix}$$

$$\underbrace{\hphantom{aaaaaaaaaaaaaaaaaaaaaaaaaaaaaaaaaaa}}$$

$$\begin{bmatrix} \dfrac{\partial \zeta_o}{\partial x} + \text{tg } \varphi \\ -1 \\ o \end{bmatrix}$$

Pour tout M' appartenant à la surface d'onde tel que (M, M') soit parallèle à $\eta$, le rayon normal à la surface d'onde en M' admet -$\overline{p}$ (M) pour vecteur directeur.

Surface d'onde en bord de plieuse :

On la choisit arbitrairement torique (voir Fig.7)
chemin optique de cette surface à un point quelconque P : (x$_p$, $\zeta_p$, $\eta_p$) :

$$\left[\sqrt{x^2_p + (\zeta_p + R)^2} - R\right]^2 + \eta^2_p = d^2$$

Equation optique :
si P = M' + $\overline{\lambda p}$ est un point du réflecteur

$$\lambda + d = k$$

d'où

$$d^2 = k^2 + \lambda^2 - 2\,k\lambda$$

$$= \eta^2_{M'} + x^2_p + (\zeta_p + R)^2 + R^2 - 2R \sqrt{x^2_p + (\zeta_p + R)^2} \qquad (\eta_p = \eta_{M'})$$

$$x^2_p = \lambda^2 p^2_x + \lambda\,2\,x_M\,p_x + x^2_M$$

$$(\zeta_p + R)^2 = \lambda^2 p^2_\zeta + \lambda\,2\,(\zeta_M + R)\,p_\zeta + (\zeta_M + R)^2$$

$$x^2_p + (\zeta_p + R)^2 = \lambda^2 + \lambda 2\,(x_M\,p_x + (\zeta_M + R)p_\zeta) + x^2_M + (\zeta_M + R)^2$$

L'équation ci-dessus devient alors

$$2R\sqrt{x^2_p + (\zeta_p + R)^2} = \underbrace{2\lambda\,(x_M\,p_x + (\zeta_M + R)\,p_\zeta + k)}_{A} + \underbrace{x^2_M + (\zeta_M + R)^2 + \eta^2_{M'} + R^2 - k^2}_{B}$$

$$4R^2\,[x^2_p + (\zeta_p + R)^2] = 4\,A^2\lambda^2 + 4\,AB\,\lambda + B^2$$

$$4\,(R^2 - A^2)\,\lambda^2 + 4\lambda\,[2R^2\,[x_M\,p_x + (\zeta_M + R)\,p_\zeta] - AB] + [x^2_M + (\zeta_M + R)^2]\,4R^2 - B^2 = 0$$

d'où $\lambda$ et P

Si $\dfrac{\partial \zeta_c}{\partial x}(o) + \tan\varphi = o$, $\quad$ k=2f

<u>Calcul de f :</u> Le calcul est effectué avec l'objectif d'avoir une hauteur H et d'intercepter le dernier rayon réfléchi par la plieuse (calcul dans l'hypothèse indiquée ci-dessus, en x=0, et donc pour un arc parabolique), de sorte que tous les rayons émis par la source vers le miroir 6 soient réfléchis/renvoyés à l'extérieur du module.

Le module selon l'invention permet donc d'obtenir des faisceaux ou une partie des faisceaux code, aussi bien des faisceaux code selon les réglementations européennes que selon les réglementations américaines.

On peut également envisager la réalisation d'un projecteur route comportant un module d'éclairage décrit précédemment mais dans lequel le miroir de renvoi est situé essentiellement au-dessous du miroir collecteur lorsque le module est en place sur le véhicule. Un tel module correspondrait à celui représenté en figure 5 mais inversé selon une symétrie par rapport à un plan horizontal comprenant l'axe optique X-X du module. Ce module d'éclairage de type route permet ainsi de créer une coupure délimitant la partie inférieure du faisceau lumineux émis par le module d'éclairage. Préférentiellement ce module d'éclairage de type route est associé à un module d'éclairage de type code, selon l'invention ou non.

**Revendications**

**1.** Module d'éclairage, pour projecteur lumineux de véhicule automobile, prévu pour donner un faisceau à coupure, notamment un faisceau code, ce module comprenant :

- au moins une source lumineuse (S),
- un miroir collecteur (6),
- une plieuse (7) ayant une surface réfléchissante et un bord de coupure, ladite plieuse étant constituée par une portion de cylindre tournant sa convexité vers le miroir collecteur (6), et
- un miroir de renvoi (8), pour produire vers l'avant le faisceau de sortie à coupure;
les surfaces du miroir collecteur (6), de la plieuse (7), et du miroir de renvoi (8) étant des surfaces conjuguées telles que :
- le miroir collecteur (6) transforme une onde sphérique issue du centre de la source (S) en une surface d'onde se réduisant à une courbe (C) en deux dimensions, convexe vers l'avant,
- le bord de coupure de la plieuse est confondu avec cette courbe (C),
- le miroir de renvoi (8) transforme la surface d'onde précédente (C) en au moins une surface d'onde cylindrique d'axe vertical admettant comme section droite une courbe (C') permettant l'étalement horizontal du faisceau.

2. Module d'éclairage selon la revendication 1, **caractérisé en ce que** la dite plieuse admet comme direction de génératrices l'intersection (J) du plan vertical de symétrie gauche/droite de la source lumineuse et du plan moyen de la source, et **en ce que** les génératrices de la portion de cylindre formant la plieuse (7) s'appuient sur ladite courbe (C).

3. Module d'éclairage selon l'une des revendications précédentes, **caractérisé en ce que** le miroir de renvoi (8) est situé essentiellement au-dessus du miroir collecteur (6) lorsque le module est en place sur le véhicule.

4. Module d'éclairage selon l'une des revendications précédentes, **caractérisé en ce que** la source lumineuse (S) est disposée de manière à émettre un faisceau lumineux dont la direction moyenne ($\Delta$g, $\Delta$d), en projection orthogonale sur un plan horizontal, est inclinée par rapport à l'axe longitudinal (L) du véhicule et s'en écarte vers l'extérieur du véhicule.

5. Module selon l'une des revendications précédentes, **caractérisé en ce que** le miroir collecteur (6) a une forme se rapprochant d'une forme ellipsoïdale, ayant un premier foyer auquel, ou au voisinage duquel, la source lumineuse est disposée pour éclairer vers le miroir collecteur, et un deuxième foyer (F2) situé sur l'axe optique du module, le bord de coupure de la plieuse (7) passant de préférence par le deuxième foyer du miroir collecteur (6).

6. Module selon la revendication précédente, **caractérisé en ce que** le miroir de renvoi (8) a une forme se rapprochant d'une forme parabolique, pour produire vers l'avant le faisceau de sortie à coupure, le miroir de renvoi admettant un foyer confondu avec le, ou situé au voisinage du, second foyer (F2) du miroir collecteur, le bord de coupure de la plieuse passant par le foyer du miroir de renvoi, ou à son voisinage.

7. Module d'éclairage selon l'une des revendications précédentes, **caractérisé en ce que** le miroir collecteur (6) est déterminé pour transformer la surface d'onde sphérique issue du centre de la source en une surface d'onde torique correspondant à une plieuse à bord circulaire (C).

8. Module d'éclairage selon l'une des revendications précédentes, **caractérisé en ce que** le miroir de renvoi (8) est tourné d'un angle ($\varphi$) autour de l'axe optique ($\gamma$) du système pour redresser le faisceau sortant par rapport à l'horizontale.

9. Module d'éclairage selon la revendication 4, **caractérisé en ce que** les surfaces conjuguées sont déterminées pour compenser l'inclinaison de la direction moyenne d'émission de la source et donner un faisceau sortant dont l'axe soit sensiblement parallèle à l'axe géométrique du véhicule lorsque le module est en place sur le véhicule.

10. Module d'éclairage selon l'une quelconque des revendications précédentes, **caractérisé en ce que** la source lumineuse (S) est constituée par une diode électroluminescente comportant au moins un émetteur plan (E1g, E2g, E3g ; E1d, E2d, E3d) ou par plusieurs diodes électroluminescentes dont tous les émetteurs plans (E1g, E2g, E3g ; E1d, E2d, E3d) sont situés sur un même plan (Bg, Bd).

11. Module d'éclairage selon l'une quelconque des revendications précédentes, **caractérisé en ce que** l'ouverture angulaire (A) du faisceau sortant du module est d'au moins 30° du côté extérieur au véhicule.

12. Projecteur code **caractérisé en ce qu'**il comporte au moins un module d'éclairage selon l'une quelconque des revendications précédentes.

**13.** Projecteur code selon la revendication 12, **caractérisé en ce qu'**il comporte comme source lumineuse (S) des diodes électroluminescentes à émetteurs plans (E1g, E2g, E3g ; E1d, E2d, E3d) qui sont situés sur un même plan (Bg, Bd), incliné horizontalement par rapport à l'axe géométrique (L) du véhicule.

**14.** Projecteur code selon la revendication 13, **caractérisé en ce que** le plan (Bg, Bd) est incliné horizontalement par rapport à la direction transversale (T), orthogonale à l'axe géométrique (L) du véhicule, selon un angle ($\alpha$) compris entre 2° et 40°.

**15.** Projecteur code selon l'une quelconque des revendications 12 à 14, du type DBL, comportant des modules orientables (N1,N2) pour créer une zone centrale (1) du faisceau avec coupure en V, **caractérisé en ce qu'**il comporte des modules fixes (Q1,Q2,Q3) selon l'une quelconque des revendications précédentes, à ligne de coupure horizontale et à largeur de faisceau suffisante pour encadrer la zone centrale (1) dans les positions extrêmes de braquage.

**Patentansprüche**

**1.** Beleuchtungseinheit für Kraftfahrzeugscheinwerfer, die zum Erzeugen eines Lichtbündels mit Hell-Dunkel-Grenze, insbesondere eines Abblendlichts vorgesehen ist, wobei die Einheit umfasst:

- wenigstens eine Lichtquelle (S),
- einen Sammelspiegel (6),
- einen Ablenkspiegel (7) mit einer Reflexionsfläche und einem Begrenzungsrand, wobei der Ablenkspiegel von einem Zylinderstück gebildet ist, dessen konvexe Form zum Sammelspiegel (6) gerichtet ist, und
- einen Reflexionsspiegel (8), um das austretende Lichtbündel mit Hell-Dunkel-Grenze nach vorne zu erzeugen,

wobei die Flächen des Sammelspiegels (6), des Ablenkspiegels (7) und des Reflexionsspiegels (8) konjugierte Flächen sind, so dass

- der Sammelspiegel (6) eine aus der Mitte der Lichtquelle (S) stammende Kugelwelle in eine Wellenfläche umwandelt, die sich auf eine nach vorne konvexe, zweidimensionale Kurve (C) reduziert,
- der Begrenzungsrand des Ablenkspiegels mit dieser Kurve (C) zusammenfällt,
- der Reflexionsspiegel (8) die vorangehende Wellenfläche (C) in wenigstens eine zylindrische Wellenfläche mit vertikaler Achse umwandelt, die als Querschnitt eine Kurve (C') aufweist, die die horizontale Auffächerung des Lichtbündels erlaubt.

**2.** Beleuchtungseinheit nach Anspruch 1,
**dadurch gekennzeichnet, dass** der Ablenkspiegel als Richtung der Erzeugenden den Schnittpunkt (J) der linken/rechten vertikalen Symmetrieebene der Lichtquelle mit der mittleren Ebene der Lichtquelle aufweist, und dass die Erzeugenden des den Ablenkspiegel (7) bildenden Zylinderstücks auf der Kurve (C) aufliegen

**3.** Beleuchtungseinheit nach einem der vorhergehenden Ansprüche,
**dadurch gekennzeichnet, dass** der Reflexionsspiegel (8) im Wesentlichen über dem Sammelspiegel (6) angeordnet ist, wenn die Einheit im Fahrzeug eingebaut ist.

**4.** Beleuchtungseinheit nach einem der vorhergehenden Ansprüche,
**dadurch gekennzeichnet, dass** die Lichtquelle (S) solchermaßen angeordnet ist, dass ein Lichtbündel emittiert wird, dessen mittlere Richtung ($\Delta$g, $\Delta$d) in Orthogonalprojektion auf eine Horizontalebene bezüglich der Längsachse (L) des Fahrzeugs schräg verläuft und sich von dieser zur Außenseite des Fahrzeugs hin entfernt.

**5.** Beleuchtungseinheit nach einem der vorhergehenden Ansprüche,
**dadurch gekennzeichnet, dass** der Sammelspiegel (6) eine Form hat, die sich einer Ellipsoidform annähert, mit einem ersten Brennpunkt, in dem oder in dessen Nähe die Lichtquelle angeordnet ist, um in Richtung des Sammelspiegels zu strahlen, und einem auf der optischen Achse der Einheit liegenden zweiten Brennpunkt (F2), wobei der Begrenzungsrand des Ablenkspiegels (7) vorzugsweise durch den zweiten Brennpunkt des Sammelspiegels (6) verläuft.

**6.** Beleuchtungseinheit nach dem vorhergehenden Anspruch,
**dadurch gekennzeichnet, dass** der Reflexionsspiegel (8) eine Form hat, die sich einer Parabolform annähert, um das austretende Lichtbündel mit Hell-Dunkel-Grenze nach vorne zu erzeugen, wobei der Reflexionsspiegel einen Brennpunkt aufweist, der mit dem zweiten Brennpunkt (F2) des Sammelspiegels zusammenfällt oder in dessen Nähe liegt, wobei der Begrenzungsrand des Ablenkspiegels durch den Brennpunkt des Reflexionsspiegels oder in dessen Nähe verläuft.

7. Beleuchtungseinheit nach einem der vorhergehenden Ansprüche,
**dadurch gekennzeichnet, dass** der Sammelspiegel (6) dazu bestimmt ist, die aus der Mitte der Lichtquelle stammende kugelförmige Wellenfläche in eine torische Wellenfläche umzuwandeln, die einer Ablenkfläche mit rundem Rand (C) entspricht.

8. Beleuchtungseinheit nach einem der vorhergehenden Ansprüche,
**dadurch gekennzeichnet, dass** der Reflexionsspiegel (8) mit einem Winkel ($\varphi$) um die optische Achse ($\gamma$) des Systems gedreht ist, um das austretende Lichtbündel bezüglich der Horizontalen auszurichten.

9. Beleuchtungseinheit nach Anspruch 4,
**dadurch gekennzeichnet, dass** die konjugierten Flächen dazu bestimmt sind, die Neigung der mittleren Emissionsrichtung der Lichtquelle auszugleichen und ein austretendes Lichtbündel zu erzeugen, dessen Achse im Wesentlichen parallel zur geometrischen Achse des Fahrzeugs verläuft, wenn die Einheit im Fahrzeug eingebaut ist.

10. Beleuchtungseinheit nach einem der vorhergehenden Ansprüche,
**dadurch gekennzeichnet, dass** die Lichtquelle (S) von einer Leuchtdiode mit wenigstens einem ebenen Emitter (E1g, E2g, E3g; E1d, E2d, E3d) oder mehreren Leuchtdioden gebildet ist, deren ebene Emitter (E1g, E2g, E3g; E1d, E2d, E3d) alle in derselben Ebene (Bg, Bd) angeordnet sind.

11. Beleuchtungseinheit nach einem der vorhergehenden Ansprüche,
**dadurch gekennzeichnet, dass** der Öffnungswinkel (A) des aus der Einheit austretenden Lichtbündels wenigstens 30° an der Fahrzeugaußenseite beträgt.

12. Abblendlichtscheinwerfer,
**dadurch gekennzeichnet, dass** er wenigstens eine Beleuchtungseinheit nach einem der vorhergehenden Ansprüche umfasst.

13. Abblendlichtscheinwerfer nach Anspruch 12,
**dadurch gekennzeichnet, dass** er als Lichtquelle (S) Leuchtdioden mit ebenen Emittern (E1g, E2g, E3g; E1d, E2d, E3d) umfasst, die in derselben bezüglich der geometrischen Achse (L) des Fahrzeugs horizontal geneigten Ebene (Bg, Bd) angeordnet sind.

14. Abblendlichtscheinwerfer nach Anspruch 13,
**dadurch gekennzeichnet, dass** die Ebene (Bg, Bd) bezüglich der orthogonal zur geometrischen Achse (L) des Fahrzeugs quer verlaufenden Richtung (T) in einem Winkel ($\alpha$) von 2° bis 40° geneigt ist.

15. Abblendlichtscheinwerfer nach einem der Ansprüche 12 bis 14, vom Typ dynamisches Kurvenlicht DBL, mit schwenkbaren Einheiten (N 1, N2) zum Erzeugen eines mittleren Bereichs (1) des Lichtbündels mit V-förmiger Hell-Dunkel-Grenze, **dadurch gekennzeichnet, dass** er feststehende Einheiten (Q1, Q2, Q3) nach einem der vorhergehenden Ansprüche umfasst, mit horizontaler Hell-Dunkel-Begrenzungslinie und mit ausreichender Lichtbreite, um in den äußersten Lenkeinschlagpositionen den mittleren Bereich (1) zu umrahmen.

## Claims

1. Lamp module for a motor vehicle headlamp designed to provide a cut-off beam, in particular a dipped beam, this module comprising:

   - at least one light source (S),
   - a collecting mirror (6),
   - a shield (7) having a reflecting surface and a cut-off edge, the said shield comprising a portion of a cylinder, the convex surface of which faces the collecting mirror (6), and
   - a reflector (8) to produce the forwardly projected cut-off beam;

the surfaces of the collecting mirror (6), the shield (7) and the reflector (8) being conjugated surfaces in such a way that:

- the collecting mirror (6) transforms a spherical wave issuing from the centre of the source (S) into a wave surface which reduces to a curve (C) in two dimensions, which is convex forward,
- the cut-off edge of the shield combines with this curve (C),
- the reflector (8) transforms the above wave surface (C) into at least one cylindrical wave surface having a vertical axis which has as its right cross-section a curve (C') which allows the beam to spread horizontally.

2. Lamp module according to claim 1, **characterised in that** the said shield has as the direction of the generatrices the intersection (J) between the vertical right/left plane of symmetry of the light source and the median plane of the source, and **in that** the generatrices of the cylindrical portion forming the shield (7) bear on the said curve (C).

3. Lamp module according to any one of the preceding claims, **characterised in that** the reflector (8) is essentially located above the collecting mirror (6) when the module is fitted on a vehicle.

4. Lamp module according to any one of the preceding claims, **characterised in that** the light source (S) is arranged in such a way as to emit a light beam, the mean direction of which (△g,△d) in orthogonal projection on a horizontal plane is inclined in relation to the longitudinal axis (L) of the vehicle and spreads towards the exterior of the vehicle.

5. Module according to any one of the preceding claims, **characterised in that** the collecting mirror (6) is of a shape approaching an ellipsoidal shape, having a first focus in the vicinity of which the light source is located to illuminate the collecting mirror and a second focus (F2) located along the optical axis of the module, the cut-off edge of the shield (7) preferably passing through the second focus of the collecting mirror (6).

6. Module according to the preceding claim, **characterised in that** the reflector (8) is of a shape approaching a parabolic shape to produce a forwardly projected cut-off beam, the reflector having a focus which is the same as or located in the vicinity of the second focus (F2) of the collecting mirror, the cut-off edge of the shield passing through the focus of the reflector, or in its vicinity.

7. Lamp module according to any one of the preceding claims, **characterised in that** the collecting mirror (6) is constructed so as to transform the spherical wave surface issuing from the centre of the source into a toric wave surface corresponding to a shield having a circular edge (C).

8. Lamp module according to any one of the preceding claims, **characterised in that** the reflector (8) is turned through an angle (φ) about the optical axis (γ) of the system to straighten the projected beam in relation to the horizontal.

9. Lamp module according to claim 4, **characterised in that** the conjugated surfaces are constructed to compensate for the inclination of the mean emission direction of the source and provide a projected beam whose axis is substantially parallel to the geometrical axis of the vehicle when the module is fitted to a vehicle.

10. Lamp module according to any one of the preceding claims, **characterised in that** the light source (S) comprises an electroluminescent diode having at least one flat emitter (E1g, E2g, E3g; E1d, E2d, E3d) or several electroluminescent diodes all of whose flat emitters (E1g, E2g, E3g; E1d, E2d, E3d) are situated in the same plane (Bg, Bd).

11. Lamp module according to any one of the preceding claims, **characterised in that** the angular spread (A) of the beam leaving the module is at least 30° from the outside of the vehicle.

12. headlamp **characterised in that** it comprises at least one lamp module according to any one of the preceding claims.

13. Dipped headlamp according to claim 12, **characterised in that** it comprises electroluminescent diodes having flat emitters (E1g, E2g, E3g; E1d, E2d, E3d) which are located in the same plane (Bg, Bd), horizontally inclined in relation to the geometric axis (L) of the vehicle, as a light source (S).

14. Dipped headlamp according to claim 13, **characterised in that** the plane (Bg, Bd) is horizontally inclined in relation to the transverse direction (T) at right angles to the geometrical axis (L) of the vehicle, by an angle (α) of between 2° and 40°.

15. Dipped headlamp according to any one of claims 12 to 14, of the DBL type, comprising orientatable modules (N1, N2) to create a central zone (1) of the beam with a V cut-off, **characterised in that** it comprises fixed modules (Q1, Q2, Q3) according to any one of the preceding claims, having a horizontal cut-off line and a sufficient beam width to encompass the central zone (1) in the extreme aiming positions.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6966675 B
- EP 1528312 A

- FR 0603062